# EUROPEAN PATENT SPECIFICATION

(11) **EP 3 894 249 B1**
(45) Date of publication and mention of the grant of the patent: **18.11.2026**
(21) Application number: 19832740.5
(22) Date of filing: 11.12.2019
(51) Int. Cl.: B60K 1/00, B60K 1/04, B60K 7/00, B60K 17/04

(54) **AN ELECTRIC VEHICLE**
ELEKTROFAHRZEUG
VÉHICULE ÉLECTRIQUE

(30) Priority: 13.12.2018 IN 201821047186
(43) Date of publication of application: 20.10.2021
(73) Proprietor: Bajaj Auto Limited, Pune 411035 (IN)
(72) Inventor: JOSHI, Ashish Mohaniraj, Mumbai-Pune Road, Akurdi Pune 411035 (IN); GUPTA, Avijit, Mumbai-Pune Road, Akurdi Pune 411035 (IN)
(74) Representative: Pace Napoleone, Maria
(86) International application number: PCT/IN2019/050907
(87) International publication number: WO 2020/121327

(56) References cited:
- EP-A1- 2 505 480
- EP-A1- 2 783 974
- JP-A- 2006 008 131
- US-A1- 2012 181 097

## Description

### Field of the Invention

This invention relates to electric vehicles and more particularly to packaging of one or more batteries and transmission system within electric vehicles, particularly 2-wheeler (2W) vehicles.

### Background to the Invention

A strong trend to electric vehicle manufacture and use is now becoming evident as concerns with climate change and availability of fossil fuels become evident. Electric vehicles include a number of batteries including a large number of electric cells as a power source and a transmission system as used in conventional vehicles. The number of batteries and transmission system is driven largely by the required vehicle range. At the present time, transmission system along with readily available batteries remain bulky and this may limit their use particularly where desired vehicle range conflicts with small vehicle size.

For example, small vehicles which currently operate using liquid and gaseous hydrocarbon fuels could advantageously be shifted to electric motor prime movers to reduce emissions. An initial trend to reduced emission prime movers has involved transition from petrol operated engines to gaseous fuelled engines, for example of the LPG or CNG type. This has reduced emissions. However, proposed changes in regulations, for example in India, is driving a shift to electrically powered vehicles and there are obvious difficulties in reconfiguring a vehicle fleet to operate with electric motors. Vehicle re-design and re-configuration of manufacturing plants for electric vehicle manufacture is a potentially time consuming and costly exercise. Yet it is desirable to meet directives/focus set by the Government of various countries.

Two wheeled vehicles will also be provided with electric power in coming years. Packaging of the electric battery and transmission is important and the present applicant has disclosed a frame arrangement for this purpose in co-pending Indian Patent Application No. 201821047188 filed on 13^{th} December' 2018.

Such vehicles must be provided with an electric motor as a prime mover and transmission. The motor is supplied with power from batteries to produce a motive force which is further transferred to driving wheels of the vehicle through transmission system. The electric motor and transmission requires considerable space. Packaging the same in given limited space is a challenge as well as a packaging arrangement shall allow efficient transmission of electric power as torque to the driven wheel. At the same time, the transmission must be integrated into the vehicle in a cost effective way with minimum changes in existing vehicle layout. Aesthetic of the vehicle is an important aspect while packaging and designing the vehicle. Hence, the packaging of the components needs to be compact and overall aesthetics of the vehicle should not be hampered. This may present some challenge in the case of two wheelers where space for packaging the transmission is substantially constrained.

In electric vehicles the preferred location of the battery is central lower position of the vehicle as a battery being heavier component, central lower position helps in providing better balance and handling of the vehicle. However; due to the central lower position of the battery the overall longitudinal length of the vehicle may increase. Therefore, to place the battery at desired location with minimum impact on overall size of the vehicle is challenging.

EP 2505480 discloses an electric vehicle that includes an axle which is a hollow cylindrical shaft. A motor shaft is inserted into a hollow portion of the axle substantially coaxially with the axle. On one side of a wheel, a motor is connected to a base end of the motor shaft extending from one end of the axle. On the other side of the wheel, a reduction mechanism is connected to a leading end of the motor shaft extending from the other end of the axle.

EP2783974 discloses an electric scooter in which a front end part of a swing arm is swingably supported on a vehicle body frame having a lower frame extending to the rear from a rear end of a down frame extending downwardly to the rear from a head pipe, and a pair of left and right rear frames provided to be connected to a rear end part of the lower frame and inclined so as to go upwardly to the rear at least beneath a riding seat, a power unit employing an electric motor as a power source is provided on the swing arm, a rear wheel is axially supported on a rear part of the swing arm, and a battery box housing a battery is disposed between the pair of left and right rear frames beneath the riding seat, wherein a single support shaft swingably supporting the front end part of the swing arm on the vehicle body frame is disposed beneath the battery box. Thus, it is possible to reduce the influence of the road surface on the rear wheel and suppress vibration by ensuring the length in the fore-and-aft direction for the swing arm while enabling the use of the single support shaft.

US2012181097 discloses an electric vehicle with a structure allowing cooling of on-board batteries collectively disposed within a swing arm. The electric vehicle includes a swing arm that houses an electric motor that is swingably mounted to a vehicle body and drives a drive wheel WR, and batteries of a substantially rectangular parallelepiped. A wide case portion that houses the batteries is formed at a position toward a pivot shaft of the swing arm. Also, a protruding portion for forming an air reservoir space above the batteries is formed at a roof portion of the wide case portion. The batteries are disposed side by side in a front-rear direction of the vehicle body. The protruding portion, in a side view of the vehicle body, is substantially convex protruding upward across the batteries.

JP2006008131 aims to provide a motor-driven scooter type vehicle capable of enhancing the degree of versatility of the design of a power unit suspension part and reducing the transverse width of a power unit by arranging electric motors of the power unit on a road surface and at a position separate from the power unit suspension part without sacrificing the internal capacity of an article storage chamber. To this end the document discloses in the motor-driven scooter type vehicle, a power transmission that is collectively stored in a unit case, the power of an electric motor being transmitted to the input side of the power transmission, and a rear wheel that is pivotably supported by the output side to constitute one power unit. A front portion of the power unit is suspended by a vehicle body frame, and a rear portion of the power unit is vertically vibrated together with the rear wheel. A shock absorber to absorb the upper and lower vibration of the rear wheel with respect to the vehicle body is arranged, and the electric motor is installed outside the unit case of the power unit. This provides an electric vehicle in which weight balance is easily achieved and a drive system such as a motor can be compactly disposed on a wheel.

It is an object of the present invention to provide an electric vehicle design with a compact packaging of prime mover and transmission assembly which is cost effective and efficient.

### Summary of the Invention

With this object in view, the present invention provides an electric vehicle according to the independent claim appended hereto. Other features and examples are set out in the dependent claims.
In accordance with one example, the electric vehicle comprises:
a frame;
an electric battery module comprising at least one battery connected to the frame;
an electric motor receiving power from the battery module;
a transmission system provided with a transmission casing; said electric motor 20 is closely coupled to the transmission system (80) and is mounted on the transmission casing; and
a rear wheel receiving power from the electric motor through the transmission system and is connected to the frame using a rear suspension system; wherein the rear wheel is connected to the frame using said casing forming a part of the rear suspension system.

The transmission system and said electric motor are closely coupled and mounted within the dimensions of rear wheel. This helps in compact packaging thereby maintaining appropriate vehicle length as well as provides good aesthetics. The transmission system may form a structural element of a suspension system and, in this case, a number of options are available. According to first embodiment, where the vehicle is a 2 wheeler vehicle such as a scooter, a swing arm is typically included as a key component of the rear suspension system as it connects the rear wheel pivotably with the frame of the vehicle. The swing arm locates the rear axle while pivoting vertically, to allow the rear suspension system to absorb shocks from bumps in the road. Motor may be mounted on the transmission casing. In such case, the transmission casing (which also acts as a motor shaft casing) may act as the swing arm. One end of the transmission casing may conveniently be mounted to the frame at a first pivot joint forward of the rear wheel while the other end is mounted to a rear suspension member, such as a rear shock absorber, at a second pivot joint while the transmission system is also driveably connected to the rear wheel. Preferably, the second pivot joint is provided on the casing itself which helps in securely mounting one end of the shock absorber which is located on the same side of the vehicle due to the load imposed by the electric motor and transmission systems. This option avoids any requirement for providing separate and specialised suspension mounting arrangements thereby helping to reduce complexity and cost. This option may also remove the need for a separate swing arm, therefore saving cost. It also helps in compact arrangement and better aesthetics. As the separate swing arm is not provided, weight of the vehicle is also reduced which is one of the important aspect while designing electric vehicle.

According to second embodiment, and in an option that may include the first, the transmission casing may not acts as a support member for the rear suspension system. The mounting point of shock absorber is provided separately and not on the transmission casing which may be on either side of vehicle.

The vehicle may be conveniently provided with a mono-suspension with only one rear shock absorber used to provide necessary suspension for the vehicle. Managing the suspension with only one rear shock absorber helps in reducing the overall cost.

The transmission system may be a single speed, multi stage transmission. The number of reduction stages in the transmission system may vary based on vehicle requirements. Preferably, a fixed ratio double stage, single speed transmission is used. The transmission system is closely coupled with electric motor such that an output shaft of motor is proximate to the input shaft of transmission unit and connected to transfer the torque generated by the motor. The number of reduction stages corresponds to a number of gear pairs. An output shaft of the motor is connected to the input shaft of transmission through a first gear pair. The input shaft of the transmission is connected to an output shaft through a second gear pair. Output torque received from the transmission system is then transmitted to the rear wheel of the vehicle as the output shaft of transmission assembly is directly connected to the axle of the rear wheel. Alternatively, a suitable drive, such as a belt drive, may be used to transmit the power from motor to wheel. If a separate swing arm is provided, which should not be necessary for reasons given above, the motor and transmission assembly should be mounted on the vehicle swing arm.

The input shaft is supported at both ends by bearings, which in turn are supported in transmission housing. The primary input gear is rotatably mounted on the motor output shaft (integral in this case). The motor output shaft is connected to input gear coaxially, the arrangement is made such that the motor shaft and input gear connection lies within the input gear length supported by the aforementioned bearings. This helps with reducing the mesh-misalignment of the primary gear pair, which further helps in considerable reduction in the gearbox whine noise. This arrangement is particularly preferable as the primary gear pair is highly susceptible to unacceptable levels of gear whine noise due to high RPMs.

According to one of the embodiment, the motor and transmission housing are separate. The motor output shaft coming out of motor housing is connected to the transmission housing such that the motor output shaft is supported at four locations, two locations are within motor housing and other two locations are in transmission housing. However; according to another embodiment, the motor & transmission housing are integrated into a single housing wherein; the motor output shaft may be supported only at three locations using bearings. Two locations being ends of the shaft and third location is at a common point where two housings are integrated.

The motor output shaft is provided with an input gear as an integral part of the motor output shaft. The input gear is meshed with the teeth provided on the outer periphery of the motor output shaft. Due to the backlash provided between the input gear and the teeth of motor output shaft a noise is produced especially due to sudden acceleration or deceleration at low speed level. In order to obviate this noise a silent bush is introduced. The input gear is fitted and fixed on the motor output shaft with a help of a bolt meshed with the internal threads provided on the inner part of the motor output shaft. The bush is mounted in gap created between bolt and inner surface of input gear. The bush helps in absorbing the noise thereby eliminating the problem of noise.

This layout also helps with reducing the overall width of the gearbox as most/all of the protruding motor output shaft length is accommodated in the input gear length. The exceptionally low misalignment values also help in reducing the gearbox size as other solutions for reducing whine noise might not be needed here.

Further, this transmission arrangement eliminates the need of a flexible drive transmitting element (such as chain or belt drive) to accommodate the rear wheel travel. This results in improved driveline efficiency, better NVH characteristics and reduced overall servicing/adjustment requirements. Though, the flexible drive may be used if required.

The motor and transmission can be placed on either side of the vehicle. The selected side will depend on constraints such as location of passenger foot rest, side stand etc. A cover is desirably mounted over the transmission casing to direct air flow towards the motor. Such cover is typically designed to improve vehicle aesthetics.

The electric battery module is a relatively heavy vehicle component. For a two wheeled vehicle, a substantially equal weight distribution along the length of the vehicle is highly desirable to enable a driver to balance weight distribution in order to balance the vehicle during driving. An uneven weight distribution within the vehicle, though possible, makes it difficult for a driver to maintain vehicle balance which can ultimately lead to unsafe conditions. Ideally, the battery or battery module is located centrally along the width of the vehicle, preferably at a central location along the length of the vehicle. The position of the battery plays an important role in defining the centre of gravity (CG) of the vehicle. Desirably, the battery is positioned on a central lower side of vehicle, shifting the CG of vehicle to substantially the same location. Such CG location helps in improving driving stability, handling and overall efficiency of the vehicle.

With the use of transmission casing as a swing arm the battery position can be lowered. Motor and transmission system are closely coupled on the transmission casing. This helps in a compact arrangement of batteries without increasing overall length of the vehicle.

The vehicle, as described above, is conveniently a two wheeler vehicle such as a motorcycle or scooter.

### Brief Description of Drawings

The electric vehicle of the present invention may be more fully understood from the following description of preferred embodiments thereof, made with reference to the accompanying drawings in which:
Fig. 1 is a partial isometric view of an electric vehicle according to a first embodiment of the present invention.
Fig. 2 is a partial side view of the electric vehicle of Fig. 1.
Fig. 3 is a first detail side view projected from Fig. 3 showing vehicle control unit, motor transmission assembly and shock absorber in relation to the rear frame portion of the electric vehicle of Fig. 1.
Fig. 4 is a second detail side view projected from Fig. 3 showing the battery, vehicle control unit and shock absorber.
Fig. 5 is a schematic side section view of the rear portion of the electric vehicle of Fig. 1.
Fig. 6 is a partial side view of the rear portion of the electric vehicle of Fig. 1.
Fig. 7(a) is a schematic partial rear left hand side view showing the motor-transmission position for the electric vehicle of Fig. 1.
Fig. 7(b) is a schematic partial rear right hand side view showing the suspension system for the electric vehicle of Fig. 1.
Fig. 7(c) is a schematic partial left hand side isometric view showing the suspension system for the electric vehicle of Fig. 1.
Fig. 7(d) shows a detail from Fig. 7(c) showing the motor transmission assembly which also forms part of the suspension system of the electric vehicle of Fig. 1.

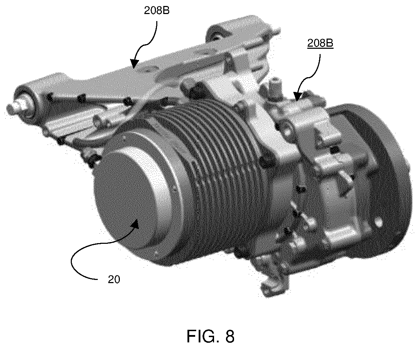

Fig. 8 is an isometric view showing the motor-transmission assembly for the electric vehicle of Fig. 1.
Fig. 9 is a schematic layout of the transmission system included within the motor-transmission assembly of Fig. 8.
Fig. 10 is a schematic view of layout of transmission system provided with integral housing according to one of the embodiment of present invention
Fig. 11a represents a schematic view of the transmission system with silent bush according to one of the embodiment of present invention.
Fig. 11b represents a detailed schematic view of the transmission system of Fig. 11a

### Description of Preferred Embodiment of the Invention

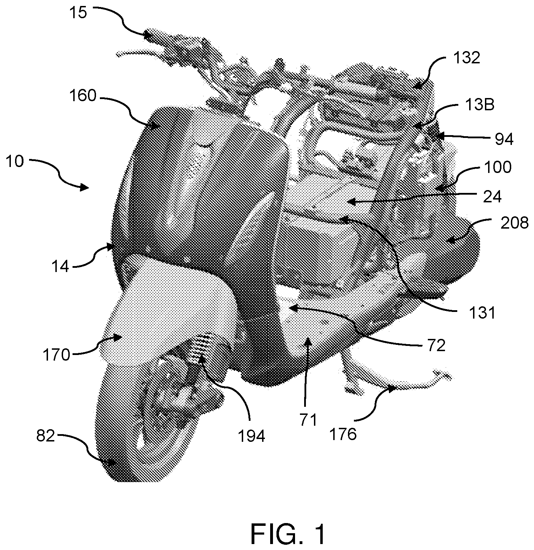

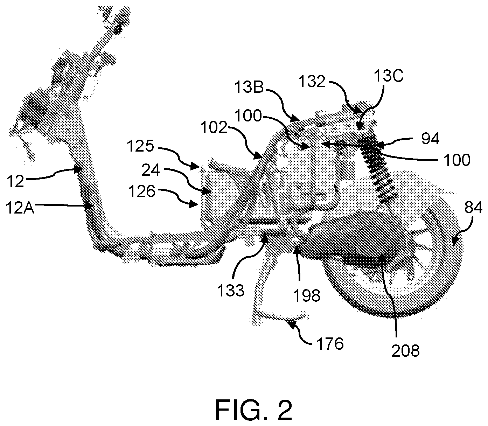

Referring now to Figs. 1 and 2, there is shown an electric vehicle 10 suitable for use as a commuter vehicle and having a frame 11 having a head tube 12, a front portion 12 and a rear frame portion 13. The electric vehicle 10 is a two wheeler scooter including a front wheel 82 and rear wheel 84. Rear wheel 84 is provided with a rear mudguard 84A and a swing arm suspension system described further below with a single shock absorber 94. Scooter 10 is shown mounted on a stand 176 of conventional form.

The driver, who may sit on seat 103, steers electric vehicle 10 through handlebar 15 which includes brakes and horn 15A. The driver is protected by front panel or guard 160 and front mudguard 170 and may comfortably place feet on floor board 71.

Electric vehicle 10 has an electric motor 20 and transmission system 80 are closely coupled and forming an integrated motor-transmission assembly 208, powered by an electric battery module 24 comprising a single battery as shown in Figs. 1 to 4. Electric battery module 24 is positioned to the rear of the vehicle 10 above the electric motor 20 and transmission system 20, a position which provides a convenient position for routing the wire harness.

Electric motor 20 has a rating of 4kW to 10 kW (though this rating is dictated by application) and is controlled by vehicle control unit (VCU) 100. Electric battery module 22 including at least one battery 24 each with 48 volt rating provides electric power to motor 20. Electric battery module 22 is located below the seat 103 and the luggage compartment 105, of the scooter 10 which demonstrates compactness as space remains available even with a change from an internal combustion engine prime mover to an electric motor prime mover. Electric battery module 22 includes a protective frame structure 23.

Battery module 22 requires to be securely connected to the rear frame portion 13 and a number of locking means, in the form of nut and bolt fasteners, are used for this purpose.

Scooter 10 includes a frame 11 as mentioned above and this frame structure, which supports the electric battery module 24 and the motor-transmission assembly 208 along with further vehicle components. Frame 11 is described in the Applicant's co-pending Indian Patent Application, filed under application number 201821047188 dated 13^{th} December' 2018 and is therefore no further described here. It may be noted, however, that the electric battery module 22 is a relatively heavy vehicle component. For scooter 10, a substantially equal weight distribution along the length of the scooter 10 is highly desirable to enable a driver to balance weight distribution in order to balance the scooter 10 during driving. To that end, the electric battery module 22 is located centrally along the width of the scooter 10, at a central lower location along the length of the scooter 10 below rear portion of the frame 13. This central lower position of the battery module 22 relative to scooter 10 effectively defines the centre of gravity (CG) of the scooter 10. Such CG location helps in improving driving stability, handling and overall efficiency of the scooter 10.

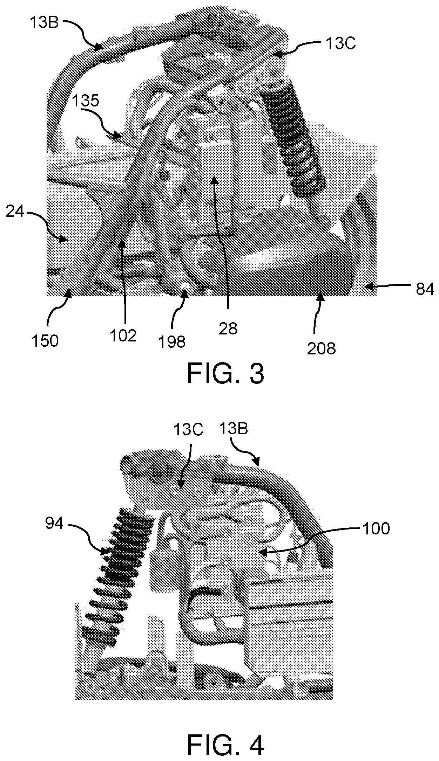

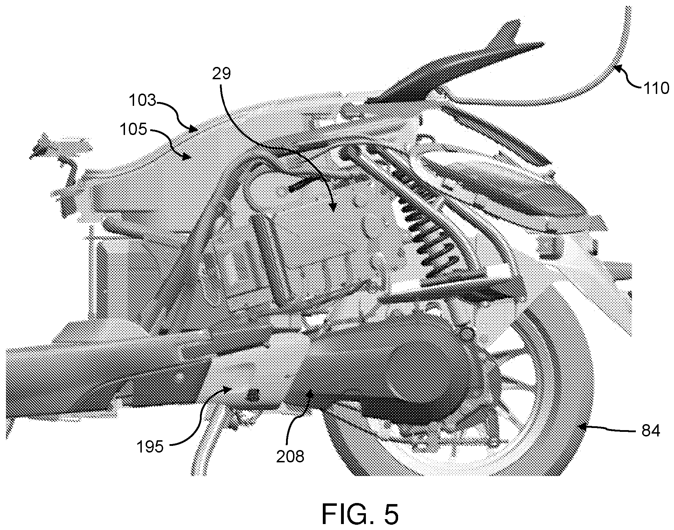

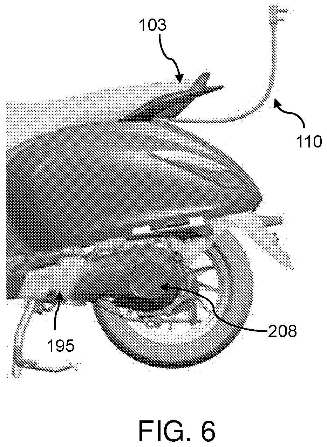

Referring to Figs. 3 to 7(d), scooter 10 is provided with a rear mono-suspension i.e. only one shock absorber 94 on the motor-transmission system 20/80 side of scooter 10 as most load is on this side. Shock absorber 94 is desirably of the SNS type as described in Indian Patent No. 695/MUM/2005, is used to provide rear suspension to reduce cost. Shock absorber 94 is located at the rear of scooter 10 rather than at its centre.

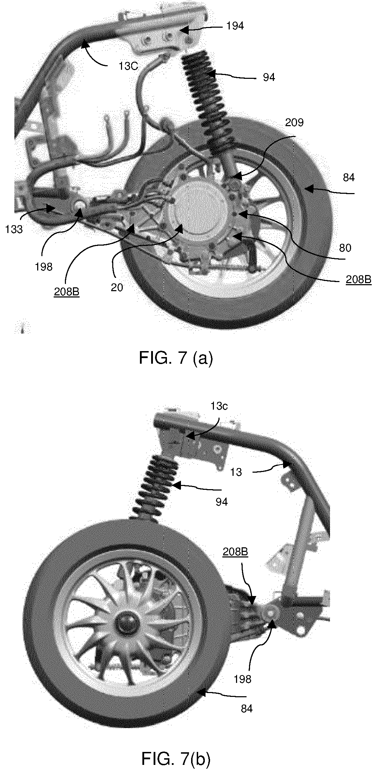

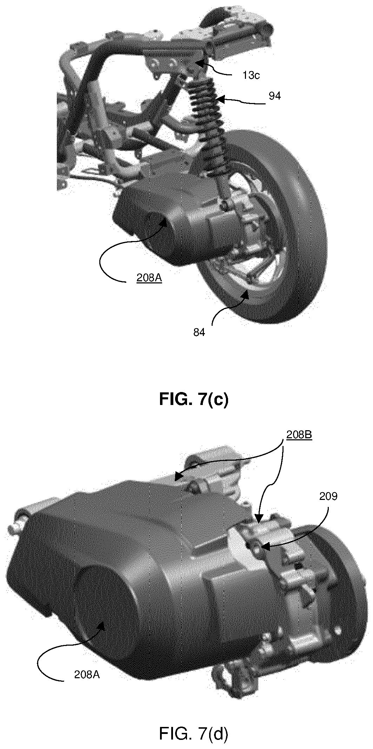

The motor 20 and transmission 80 are closely coupled and mounted within dimensions of the rear wheel 84 as specifically shown in Fig. 7(a). This helps in a compact packaging without hampering the overall length of the vehicle and also provides good aesthetic. The motor-transmission casing 208B forms a structural element of the rear suspension system. Motor-transmission casing 208B acts as a swing arm since it is pivotally mounted both to a mounting bracket portion 133, connecting with a tube 16 of frame 11, at pivot joint 198 forward of the rear wheel 84 and to shock absorber 94 at a pivot joint 209. The shock absorber has a fixed mounting to mounting bracket 194 connected to a rear tube 13C of the rear frame portion 13. Such mounting allows the motor-transmission assembly 208 to vertically pivot in the manner of a swing arm. As scooter 10 moves along a road, the shock absorber 94 spring element is variably placed into tension and compression, the motor-transmission casing 208B correspondingly pivoting as a swing arm absorbing shocks from bumps in the road. Also, the transmission casing 208B absorbs the shocks & braking torque and hence there is no need to provide any separate member to take counter breaking torque. The cost and weight of a dedicated swing arm is thereby avoided.

The mounting arrangements described above also allow the transmission casing 208B to act as a support member for the rear suspension system. The further pivot joint 209 is provided on the casing 208B itself which helps in securely mounting one end of the shock absorber 94. This option avoids any requirement for providing separate and specialised suspension mounting arrangements thereby helping to reduce complexity and cost.

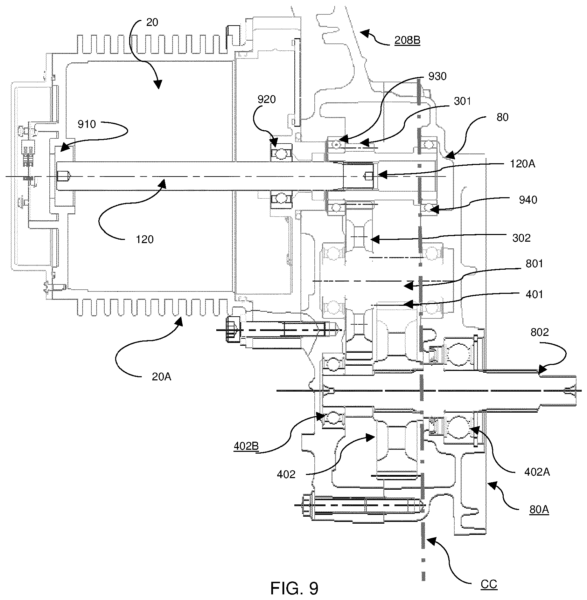

Further features of the transmission system 80 which transmits torque from electric motor 20 under the supervision of vehicle control unit 100 are now described with reference to Fig. 9. The transmission system 80 is a single speed or single reduction type transmission. The number of reduction stages in the transmission system 80 may vary based on vehicle requirements. A fixed ratio double stage transmission system 80 with a single pair of input and output gears is used. The motor 20 is closely coupled with the transmission system such that an output shaft 120 of motor 20 is proximate to the input shaft of transmission system 80 and connected to transfer the torque generated by the motor 20. The number of reduction stages corresponds to a number of gear pairs. The output shaft 120 of the motor 20 is connected to the input shaft 801 of transmission system through a first gear pair 301, 302. According to one of the embodiment, the output shaft 120 of the motor including input gear 301 is supported at four locations i.e. at both the ends (910 & 940) one end being in motor housing 20A while other end is supported at transmission housing 80A. The output shaft 120 is also supported at middle section using bearings (930,940) provided at motor housing 20A and transmission housing 80A.The input shaft is supported at both ends by bearings, which in turn is supported in transmission housing 80A. The primary input gear 302 is rotatably mounted on the input shaft 801 (integral in this case). The motor output shaft 120 is connected to input gear 301 coaxially by means of internal splines 120A, the arrangement is made such that the motor shaft 120 and input gear 301 connection lies within the input gear length supported by the aforementioned bearings. The input shaft 801 of the transmission system is connected to the output shaft 802 of transmission system 80 through a second gear pair 401, 402. The output shaft 802 is supported at two locations through bearings (402A, 402B). The vehicle centreline (CC) as shown in Fig. 9, passes between bearings at two locations (420A, 402B). The above described transmission & bearing arrangement helps in avoiding uneven forces (even distribution of load) acting on bearing, thereby maximizing bearing life and no extra bearings are needed to support the shaft. Output torque received from the transmission system 80 is then transmitted to the rear wheel 84 of the scooter as the output shaft 802 of transmission system 80 is directly connected to the axle of the rear wheel 84. A suitable drive, such as a belt drive, may be used to transmit the power from motor to wheel.

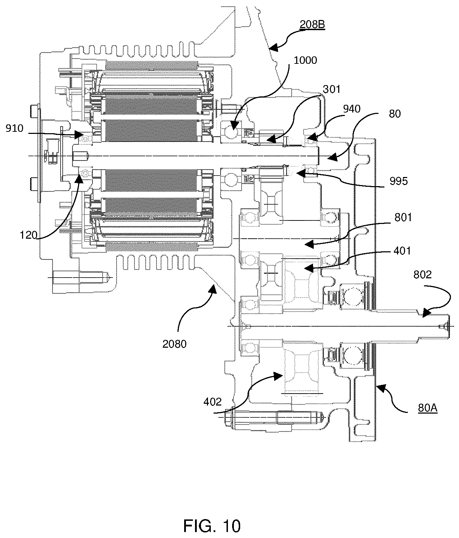

According to another embodiment of present invention, the transmission system is further improved as shown in Fig. 10. Instead of separately providing motor housing 20A and transmission housing 80A, both the housings are integrated into a single housing 2080. This eliminates the various problems such as noise, difficulty in assembling two different housings with mounting of motor output shaft 120 etc. The motor output shaft 120 is supported at three locations (910, 940 & 1000) instead of four locations, this helps in reducing noise as well as helps in easy assembly. The shaft 120 is supported only at a common single location (1000) in middle location whether both the housings (20A & 80A) are integrated. Both the ends of the motor output shaft 120 are supported at housing 2080 using bearings (910 & 940) as in previous embodiment-In order to restrict any uneven load from acting on bearings (910, 940, 1000) the input gear 301 is clamped with the help of a nut 995. One bearing pair is therefore eliminated thereby reducing complexity & cost.

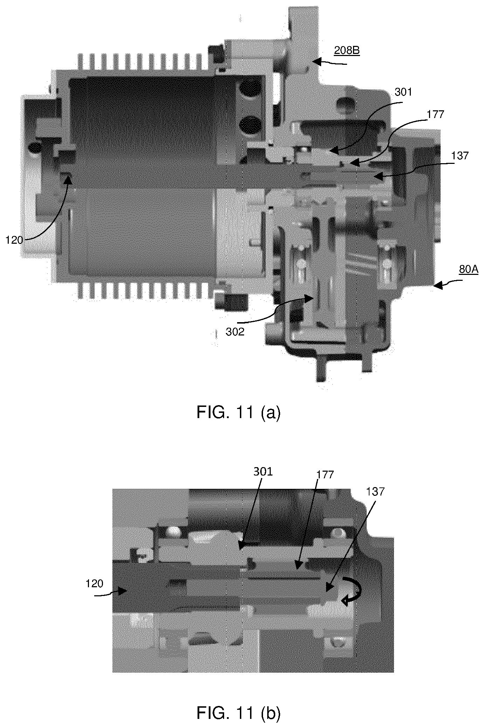

The motor output shaft 120 is provided with an input gear 301 as an integral part of the motor output shaft 120. The motor output shaft 120 is provided with teeth on its outer periphery to mesh with an input gear 301 of first gear pair. Due to the backlash provided between the internal teeth of input gear 301 and the teeth of motor output shaft 120 a noise is produced especially due to sudden acceleration or deceleration at low speed level. In order to obviate this noise a silent bush 177 is introduced as illustrated in Fig. 11a and 11b. The input gear 301 is fitted and fixed on the motor output shaft 130 with a help of a bolt 137 meshed with the internal threads provided on the inner part of the motor output shaft 120. The bush 177 is mounted in gap created between bolt 137 and inner surface of input gear 301. The bush 177 helps in eliminating the problem by absorbing the noise.

A cover 208A is desirably mounted over the transmission casing 208B to direct air flow towards the motor 20. Such cover 208A, shown schematically in Fig. 7d is typically designed to improve vehicle aesthetics.

Modifications and variations to the electric vehicle described in the present specification may be apparent to skilled readers of this disclosure. Such modifications and variations are deemed within the scope of the appended claims.

## Claims

1. An electric vehicle (10), comprising:
a frame (11);
an electric battery module (24) comprising at least one battery connected to the frame (11);
an electric motor (20) receiving power from the battery module (24);
a transmission system (80);
wherein said electric motor (20) being closely coupled to the transmission system (80); and
a rear wheel (84) receiving power from the electric motor (20) through the transmission system (80), said rear wheel (84) being connected to the frame (11) using a swing arm (208B);
said swing arm (208B) functioning as a motor-transmission casing;
said electric motor (20) and said transmission system (80) are mounted within dimensions of the rear wheel (84), and
the swing arm (208B) pivotally mounted to a mounting bracket portion (133) connecting with a tube (16) of said frame (11), at a pivot joint (198) forward of the rear wheel (84) and to a shock absorber (94) at a pivot joint (209) to form a structural element of a suspension system of the vehicle (10),
**characterized in that**
the transmission system (80) is a single speed, multi-stage transmission system, wherein the transmission system (80) and said electric motor (20) are closely coupled such that an input shaft (801) of transmission system (80) is connected to an output shaft of the motor (20) through a first gear pair, and the input shaft (801) of the transmission is further connected to an output shaft (802) of transmission system (80) through a second gear pair; and wherein the output shaft (802) of the transmission system (80) is connected to the rear wheel (84) of the vehicle (10) for transmitting the torque wherein the first gear pair comprising an input gear (301) mounted on the motor output shaft (120) using a bolt (137); and wherein the bolt (137) is meshed with internal threads provided on the inner part of the motor output shaft (120) and a bush (177) is mounted in a gap created between bolt (137) and an inner surface of input gear (301).

2. The electric vehicle (10) of claim 1, wherein the swing arm (208B) is connected to the frame (11) at a first pivot joint (198) forward of the rear wheel (84), and to the second pivot joint (209) at a rear axle of the rear wheel (84) such that the swing arm (208B) pivots vertically to allow the rear suspension system to absorb shocks from bumps in the road.

3. The electric vehicle (10) of claim 2, wherein the rear suspension system comprises at least one shock absorber (209) mounted at the transmission casing (208B).

4. The electric vehicle (10) of any of the claims above, wherein the transmission system (80) utilizes a chain or belt drive to transmit the power from the motor (20) to the wheels.

5. The electric vehicle (10) of claim 1, wherein the transmission system (80) comprising an input gear (301) supported at both ends by bearings (910, 940) in a transmission housing (80A) and a input gear (301) of a first gear pair is coaxially mounted on the motor output shaft (120) such that the motor output shaft (120) and the transmission input gear (301) connection lies within the transmission input shaft length.

6. The electric vehicle (10) of claim 1, wherein the transmission system (80) is provided in transmission housing (80A) and motor (20) is provided in a motor housing (20A), wherein both the transmission housing (80A) and motor housing (20A) are separate and connected to each other such that the motor output shaft (120) including an input gear (301) is supported at four locations (910, 920, 930, 940) through bearings; and wherein two locations (910, 920) are present in motor housing (20A) and two locations (930, 940) are present in transmission housing (80A).

7. The electric vehicle (10) of claim 1, wherein the transmission system (80) and motor (20) are provided in a common integral housing (2080) such that a motor output shaft (120) including an input gear (301) is supported through bearings at three locations; wherein two locations (910, 940) are ends of the motor output shaft (120) and a third location (1000) is at an intermittent location of the motor output shaft (120).

8. The electric vehicle (10) of any of the claims above, wherein the transmission casing (208B) is provided with a cover (208A) to direct airflow towards the motor (20).

9. The electric vehicle (10) of any of the claims above, wherein the electric battery module (24) is mounted centrally and below a rear frame portion (13B).

## Patentansprüche

1. Elektrofahrzeug (10), bestehend aus:
einem Rahmen (11);
einem elektrisches Batteriemodul (24), das mindestens eine mit dem Rahmen (11) verbundene Batterie umfasst;
einem Elektromotor (20), der von dem Batteriemodul (24) mit Strom versorgt wird;
einem Getriebesystem (80);
wobei der Elektromotor (20) eng mit dem Getriebesystem (80) gekoppelt ist; und
ein Hinterrad (84), das über das Getriebesystem (80) Antriebskraft von dem Elektromotor (20) erhält, wobei das Hinterrad (84) mittels einer Schwinge (208B) mit dem Rahmen (11) verbunden ist;
wobei die Schwinge (208B) als Motor-Getriebegehäuse fungiert;
wobei der Elektromotor (20) und das Getriebesystem (80) innerhalb der Abmessungen des Hinterrads (84) angeordnet sind, und
wobei die Schwinge (208B) schwenkbar an einem Befestigungshalterungsabschnitt (133), der mit einem Rohr (16) des Rahmens (11) verbunden ist, an einem Schwenkgelenk (198) vor dem Hinterrad (84) sowie an einem Stoßdämpfer (94) an einem Schwenkgelenk (209) angebracht ist, um ein strukturelles Element eines Aufhängungssystems des Fahrzeugs (10) zu bilden,
**dadurch gekennzeichnet, dass**
das Getriebesystem (80) ein Ein-Gang-Mehrstufen-Getriebesystem ist, wobei das Getriebesystem (80) und der Elektromotor (20) derart eng gekoppelt sind, dass eine Eingangswelle (801) des Getriebesystems (80) über ein erstes Zahnradpaar mit einer Ausgangswelle des Motors (20) verbunden ist, und die Eingangswelle (801) des Getriebes ferner über ein zweites Zahnradpaar mit einer Ausgangswelle (802) des Getriebesystems (80) verbunden ist; und wobei die Ausgangswelle (802) des Getriebesystems (80) zur Drehmomentübertragung mit dem Hinterrad (84) des Fahrzeugs (10) verbunden ist, wobei das erste Zahnradpaar ein Eingangszahnrad (301) umfasst, das mittels einer Schraube (137) auf der Motorausgangswelle (120) montiert ist; und wobei die Schraube (137) mit einem Innengewinde im inneren Teil der Motorausgangswelle (120) im Eingriff steht und eine Buchse (177) in einem zwischen der Schraube (137) und einer Innenfläche des Eingangszahnrads (301) gebildeten Spalt angeordnet ist.

2. Elektrofahrzeug (10) nach Anspruch 1, wobei die Schwinge (208B) an einem ersten Schwenkgelenk (198) vor dem Hinterrad (84) mit dem Rahmen (11) verbunden ist und an dem zweiten Schwenkgelenk (209) mit einer Hinterachse des Hinterrads (84) verbunden ist, so dass sich die Schwinge (208B) vertikal verschwenkt, damit das Hinterradaufhängungssystem Stöße von Bodenunebenheiten aufnehmen kann.

3. Elektrofahrzeug (10) nach Anspruch 2, wobei das Hinterradaufhängungssystem mindestens einen am Getriebegehäuse (208B) befestigten Stoßdämpfer (209) umfasst.

4. Elektrofahrzeug (10) nach einem der vorstehenden Ansprüche, wobei das Getriebesystem (80) einen Ketten- oder Riemenantrieb verwendet, um die Kraft von dem Motor (20) auf die Räder zu übertragen.

5. Elektrofahrzeug (10) nach Anspruch 1, wobei das Getriebesystem (80) ein Eingangszahnrad (301) umfasst, das an beiden Enden durch Lager (910, 940) in einem Getriebegehäuse (80A) gelagert ist, und ein Eingangszahnrad (301) eines ersten Zahnradpaars koaxial auf der Motorausgangswelle (120) montiert ist, so dass die Verbindung zwischen der Motorausgangswelle (120) und dem Getriebeeingangszahnrad (301) innerhalb der Länge der Getriebeeingangswelle liegt.

6. Elektrofahrzeug (10) nach Anspruch 1, wobei das Getriebesystem (80) in einem Getriebegehäuse (80A) und der Motor (20) in einem Motorgehäuse (20A) angeordnet ist, wobei das Getriebegehäuse (80A) und das Motorgehäuse (20A) getrennt und derart miteinander verbunden sind, dass die Motorausgangswelle (120) einschließlich eines Eingangszahnrads (301) an vier Stellen (910, 920, 930, 940) durch Lager gelagert ist; und wobei sich zwei Stellen (910, 920) im Motorgehäuse (20A) und zwei Stellen (930, 940) im Getriebegehäuse (80A) befinden.

7. Elektrofahrzeug (10) nach Anspruch 1, wobei das Getriebesystem (80) und der Motor (20) in einem gemeinsamen integrierten Gehäuse (2080) angeordnet sind, so dass eine Motorausgangswelle (120) einschließlich eines Eingangszahnrads (301) durch Lager an drei Stellen gelagert ist; wobei zwei Stellen (910, 940) die Enden der Motorausgangswelle (120) sind und sich eine dritte Stelle (1000) an einer Zwischenposition der Motorausgangswelle (120) befindet.

8. Elektrofahrzeug (10) nach einem der vorstehenden Ansprüche, wobei das Getriebegehäuse (208B) mit einer Abdeckung (208A) versehen ist, um den Luftstrom zum Motor (20) zu leiten.

9. Elektrofahrzeug (10) nach einem der vorstehenden Ansprüche, wobei das elektrische Batteriemodul (24) zentral und unterhalb eines hinteren Rahmenabschnitts (13B) angebracht ist.

## Revendications

1. Véhicule électrique (10), comprenant :
un cadre (11) ;
un module de batterie électrique (24) comprenant au moins une batterie reliée au cadre (11);
un moteur électrique (20) recevant de l'énergie du module de batterie (24);
un système de transmission (80);
dans lequel ledit moteur électrique (20) est étroitement couplé au système de transmission (80); et
une roue arrière (84) recevant de l'énergie du moteur électrique (20) par l'intermédiaire du système de transmission (80), ladite roue arrière (84) étant reliée au cadre (11) au moyen d'un bras oscillant (208B);
ledit bras oscillant (208B) faisant office de carter de moteur-transmission;
ledit moteur électrique (20) et ledit système de transmission (80) étant montés dans l'encombrement de la roue arrière (84), et
le bras oscillant (208B) étant monté de manière pivotante sur une portion de support de fixation (133) reliée à un tube (16) dudit cadre (11), au niveau d'une articulation pivotante (198) située en avant de la roue arrière (84), et sur un amortisseur (94) au niveau d'une articulation pivotante (209), afin de former un élément structurel d'un système de suspension du véhicule (10),
**caractérisé en ce que**
le système de transmission (80) est un système de transmission à rapport unique et à plusieurs étages, dans lequel le système de transmission (80) et ledit moteur électrique (20) sont étroitement couplés de telle sorte qu'un arbre d'entrée (801) du système de transmission (80) est relié à un arbre de sortie du moteur (20) par l'intermédiaire d'une première paire d'engrenages, et l'arbre d'entrée (801) de la transmission est en outre relié à un arbre de sortie (802) du système de transmission (80) par l'intermédiaire d'une seconde paire d'engrenages ; et dans lequel l'arbre de sortie (802) du système de transmission (80) est relié à la roue arrière (84) du véhicule (10) pour transmettre le couple, la première paire d'engrenages comprenant un pignon d'entrée (301) monté sur l'arbre de sortie du moteur (120) au moyen d'un boulon (137) ; et dans lequel le boulon (137) engrène avec un taraudage interne prévu sur la partie interne de l'arbre de sortie du moteur (120), une douille (177) étant montée dans un espace ménagé entre le boulon (137) et une surface interne du pignon d'entrée (301).

2. Véhicule électrique (10) selon la revendication 1, dans lequel le bras oscillant (208B) est relié au cadre (11) au niveau d'une première articulation pivotante (198) située en avant de la roue arrière (84), et à la seconde articulation pivotante (209) au niveau d'un axe arrière de la roue arrière (84), de sorte que le bras oscillant (208B) pivote verticalement pour permettre au système de suspension arrière d'absorber les chocs dus aux aspérités de la route.

3. Véhicule électrique (10) selon la revendication 2, dans lequel le système de suspension arrière comprend au moins un amortisseur (209) monté sur le carter de transmission (208B).

4. Véhicule électrique (10) selon l'une quelconque des revendications précédentes, dans lequel le système de transmission (80) utilise une transmission par chaîne ou par courroie pour transmettre la puissance du moteur (20) aux roues.

5. Véhicule électrique (10) selon la revendication 1, dans lequel le système de transmission (80) comprend un pignon d'entrée (301) supporté à ses deux extrémités par des roulements (910, 940) dans un carter de transmission (80A), et un pignon d'entrée (301) d'une première paire d'engrenages est monté coaxialement sur l'arbre de sortie du moteur (120) de sorte que la liaison entre l'arbre de sortie du moteur (120) et le pignon d'entrée de la transmission (301) se situe dans la longueur de l'arbre d'entrée de la transmission.

6. Véhicule électrique (10) selon la revendication 1, dans lequel le système de transmission (80) est disposé dans un carter de transmission (80A) et le moteur (20) est disposé dans un carter de moteur (20A), dans lequel le carter de transmission (80A) et le carter de moteur (20A) sont distincts et reliés l'un à l'autre de telle sorte que l'arbre de sortie du moteur (120) comprenant un pignon d'entrée (301) est supporté en quatre emplacements (910, 920, 930, 940) par des roulements ; et dans lequel deux emplacements (910, 920) se trouvent dans le carter de moteur (20A) et deux emplacements (930, 940) se trouvent dans le carter de transmission (80A).

7. Véhicule électrique (10) selon la revendication 1, dans lequel le système de transmission (80) et le moteur (20) sont disposés dans un carter monobloc commun (2080) de telle sorte que l'arbre de sortie du moteur (120) comprenant un pignon d'entrée (301) est supporté par des roulements en trois emplacements ; dans lequel deux emplacements (910, 940) se trouvent aux extrémités de l'arbre de sortie du moteur (120) et un troisième emplacement (1000) se trouve en une position intermédiaire de l'arbre de sortie du moteur (120).

8. Véhicule électrique (10) selon l'une quelconque des revendications précédentes, dans lequel le carter de transmission (208B) est pourvu d'un capot (208A) pour diriger le flux d'air vers le moteur (20).

9. Véhicule électrique (10) selon l'une quelconque des revendications précédentes, dans lequel le module de batterie électrique (24) est monté en position centrale et sous une portion arrière du cadre (13B).
